# EUROPÄISCHE PATENTANMELDUNG

(11) **EP 0 803 714 A2**
(43) Veröffentlichungstag der Anmeldung: **29.10.1997**
(21) Anmeldenummer: 97103474.9
(22) Anmeldetag: 03.03.1997
(51) Int. Cl.: G01G 3/12

(54) **Füllstandsüberwachungssystem**

(30) Priorität: 23.04.1996 DE 19616192
(71) Anmelder: Zeppelin Silo- und Apparatetechnik GmbH, 88045 Friedrichshafen (DE)
(72) Erfinder: Broehm, Thomas, 88214 Oberhofen/Ravensburg (DE)
(74) Vertreter: Grünecker, Kinkeldey, Stockmair & Schwanhäusser Anwaltssozietät

(57) **Zusammenfassung**

Es wird ein Füllstandsüberwachungssystem für Behälter, insbesondere Silos angegeben, bei dem das Gewicht des Behälters eine Längenänderung eines Meßfusses bewirkt, die mit einem Dehnmeßstreifen erfaßbar ist. Die erfindungsgemäße elektrische Auswerteschaltung ist in unmittelbarer Nähe des Dehnmeßstreifens am Meßfuß angeordnet und umfaßt einen Analog/Digital-Wandler sowie einen Speicher, um einen Meßwert zu erzeugen, der für das Gewicht des Behälters kennzeichnend ist.

## Beschreibung

Die vorliegende Erfindung bezieht sich auf ein Füllstandsüberwachungssystem für Behälter insbesondere Silos gemäß dem Oberbegriff des Patentanspruchs 1.

Füllstandsüberwachungen werden bei Silos durchgeführt, um eine Bilanzierung des darin gelagerten bzw. entnommenen Materials durchzuführen. Es gibt mehrere Verfahren zur Füllstandsüberwachung, eines davon basiert auf dem Gedanken, das Gewicht des Behälters und des darin gelagerten Materials genau zu bestimmen, um daraus Rückschlüsse auf den aktuellen Füllstand des Silos zu ziehen.

Weitere Einzelheiten eines Füllstandsüberwachungssystems, welches nach diesem Verfahren arbeitet, sind der DE 37 25 332 entnehmbar. In diesem bekannten Füllstandsüberwachungssystem werden Halbleiter-Dehnmeßstreifen verwendet, um die Längenänderung eines Meßfusses zu bestimmen, welche proportional zur Kraft ist, die das Gewicht des Silos auf den Meßfuß ausübt.

Die Halbleiter-Dehnmeßstreifen erzeugen zwar sehr genaue analoge Ausgangssignale, sind jedoch auch sehr teuer. In der Regel sind für eine genauere Messung des Füllstands eines Silos mehrere Dehnmeßstreifen erforderlich. Gewöhnlicherweise werden die Ausgangssignale der Dehnmeßstreifen über eine größere Strecke hin zu einem zentralen Verstärkungs- und Auswertegerät übertragen und ggf. aufbereitet und angezeigt. Während der Übertragung der Ausgangssignale der Dehnmeßstreifen können jedoch leicht elektromagnetische Störsignale in das Meßsystem eingeschleift werden, welche die Meßergebnisse verfälschen.

Aufgabe der vorliegenden Erfindung ist es demzufolge, ein Füllstandsüberwachungssystem anzugeben, bei dem die Empfindlichkeit gegenüber Störsignalen reduziert ist und gleichzeitig bei zumindest gleichbleibender Genauigkeit der Meßergebnisse mit geringeren Kosten herstellbar ist.

Diese Aufgabe wird von einem Füllstandsüberwachungssystem mit den Merkmalen des Patentanspruchs 1 gelöst.

Durch die erfindungsgemäße Anordnung der Auswerteschaltung in unmittelbarer Nähe des Dehnmeßstreifens am Meßfuß und die unmittelbare Digitalisierung und Abspeicherung der Meßwerte vor einer Übertragung über eine längere Strecke ist das System unempfindlich gegenüber Störsignalen. Darüber hinaus ermöglicht die erfindungsgemäß aufgebaute Auswerteschaltung die Verwendung von Dehnmeßstreifen, die einen Bruchteil der teueren Halbleiter-Dehnmeßstreifen kosten, ohne daß dadurch die Genauigkeit der Messung beeinträchtigt werden würde. Nach einer erfolgten Digitalisierung ist der Meßwert mit einfach beherrschbaren Übertragungstechniken über standardisierte Datenbussysteme zu einem Zentralrechner möglich, wodurch das Überwachungssystem in die Gesamtsteuerung einer Siloanlage einfach integrierbar ist.

In einer bevorzugten Ausführung der Erfindung umfaßt die Auswerteschaltung einen Mikroprozessor, welcher den Betrieb des Analog/Digitalwandlers und des Speichers steuert. Bei dieser dezentralisierten Steuerung entfällt die Notwendigkeit, Befehlssignale für den Betrieb der Auswerteschaltung über längere Strecken von einem Zentralrechner an die Auswerteschaltung zu übertragen. Insbesondere bei einem System mit mehreren Silos vereinfacht dies beträchtlich den Aufwand für Hardware und Software.

Vorzugsweise umfaßt die Auswerteschaltung einen Verstärker, der hinsichtlich seiner Verstärkung und seines Nullpunkts einstellbar ist, wodurch das System universell für verschiedene Typen von Silos und bei veränderlichen Betriebsbedingungen einsetzbar ist.

Vorzugsweise ist die Einstellung des Verstärkers und des Nullpunkts von dem Mikroprozessor steuerbar, woraus sich die Möglichkeit ergibt, von einem Zentralrechner Konfigurationsbefehle unter Softwaresteuerung an den Mikroprozessor zu übertragen, wodurch sich die Justierung der Auswerteschaltung im Betrieb wesentlich vereinfacht.

In einer vorteilhaften Ausgestaltung der Erfindung umfaßt das System einen Temperatursensor, dessen Ausgangssignal vom Mikroprozessor zur Einstellung des Nullpunkts des Verstärkers verwendet wird, um eine automatische Temperaturkompensation zu erreichen.

In einer bevorzugten Ausgestaltung der Erfindung umfaßt das Füllstandsüberwachungssystem einen übergeordneten Steuerungsrechner, der den Speicher der Auswerteschaltung auslesen kann, um die Meßwerte zentral zu verwalten. Dabei weist das System vorzugsweise Einrichtungen auf, die zum Aufbereiten des Meßwertsignals der Auswerteschaltung dienen, um es in eine für die Übertragung zum Steuerungsrechner geeignete Form zu bringen.

Es ist von Vorteil, wenn die Auswerteschaltung in einem Gehäuse montiert ist und das Gehäuse direkt auf den Dehnmeßstreifen aufgesetzt ist. Dazu weist das Gehäuse eine Bodenöffnung auf, die in etwa den Abmessungen des Dehnmeßstreifens entspricht. In dieser Ausgestaltung sind die elektrischen Verbindungsstrecken zwischen Dehnmeßstreifen extrem kurz. Weiterhin kann das Gehäuse elektrische Abschirmmittel besitzen, um die Einstrahlung von elektromagnetischen Störsignalen zu verhindern.

Schließlich ist vorzugsweise die Bodenöffnung und der Dehnmeßstreifen mit einer Silikondichtmasse ausgegossen, um die elektrische Meß- und Auswerteschaltung vor Feuchtigkeit zu schützen.

Im folgenden wird ein bevorzugtes Ausführungsbeispiel der vorliegenden Erfindung detailliert beschrieben. Es zeigen:
Fig. 1 den prinzipiellen Aufbau eines Füllstandsüberwachungssystems für mehrere Silos,
Fig. 2 den Aufbau eines bevorzugten Ausführungsbeispiels der Auswerteschaltung, welche erfindungsgemäß in dem Füllstandsüberwachungssystem verwendet wird, und
Fig. 3 den Aufbau einer elektrischen Schaltung zur Verstärkung des Ausgangssignals eines Dehnmeßstreifens, welche Teil der erfindungsgemäßen Auswerteschaltung ist.

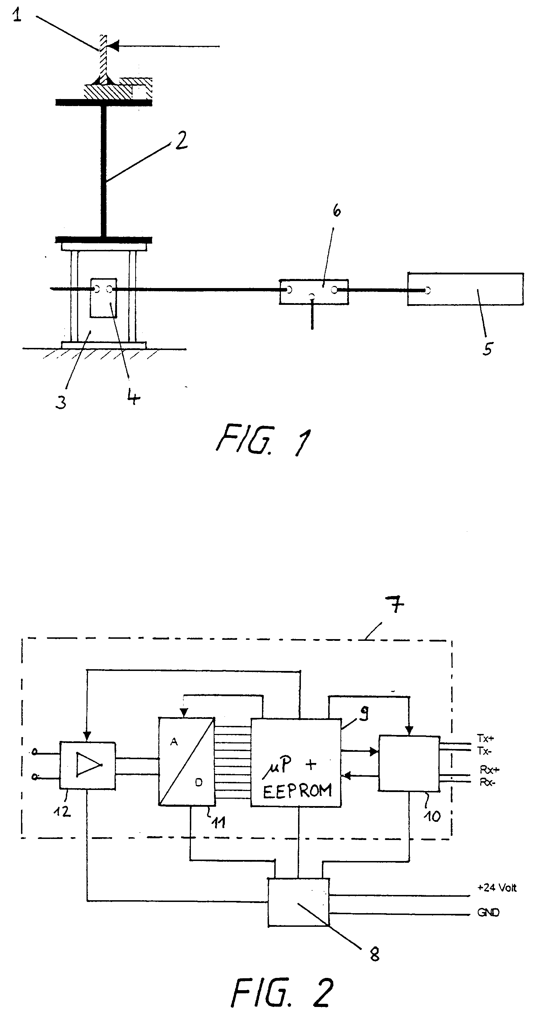

Figur 1 zeigt im Überblick den Aufbau des erfindungsgemäßen Füllstandsüberwachungssystems. Der Silobehälter ist nur schematisch durch eine Außenwand 1 dargestellt. Der Pfeil in der Zeichnung soll den Durchmesser des Behälters symbolisieren. Das Silo wird an seinem unteren Ende von einer Ringauflage 2 abgestützt, die selbst auf einem Meßfuß 3 gelagert ist, der auf einem Fundament steht, ggf. dort verankert ist. Der Meßfuß besteht aus einem I-förmigen Träger, an dessen Mittelwand der Dehnmeßstreifen (DMS) etwa mittig befestigt, vorzugsweise angeklebt ist.

Nach dem Anbringen des DMS an dem Träger wird das Gehäuse 4 der Auswerteschaltung am Träger befestigt. Das Gehäuse weist eine Öffnung im Boden auf, die in etwa die Größe des DMS besitzt. Das Gehäuse wird vorzugsweise durch Schrauben oder Kleben an dem Träger befestigt. Anschließend wird die Bodenöffnung und der DMS mit einer Silikonmasse ausgegossen, um ihn vor Witterungseinflüssen, vor allem vor Feuchtigkeit zu schützen. Im Gehäusedeckel befinden sich zwei genormte Buchsen zum Anschluß der Auswerteschaltung an ein Bussystem, wie es in Fig. 1 gezeigt ist.

In dem Bussystem können eine Anzahl von Auswerteschaltungen an einen zentralen Steuerungsrechner 5 angeschlossen werden, wobei mittels eines Pegelkonverters 6 sichergestellt wird, daß Bussignale in ein Format gebracht werden, das vom zentralen Steuerungsrechner akzeptiert wird. Beispielsweise ist der zentrale Steuerungsrechner ein handelsüblicher PC mit einem Intel 80X86 Prozessor, der über eine RS232 serielle Schnittstelle mit dem Pegelkonverter 6 kommuniziert, der den RS232-Pegel auf den RS422-Pegel umsetzt. In diesem Format können Steuersignale auch über größere Entfernungen hin übertragen werden.

Eine weitere Möglichkeit ist es, Steuerungssignale über ein optisches Lichtleitsystem mit Lichtleitfasern zu übertragen. In diesem Fall umfaßt der Pegelkonverter 6 eine Laserdiode zum Umsetzen der elektrischen Steuersignale in geeignete lichtelektrische Impulse. Bei dieser Ausführung sind die Übertragungsverluste extrem klein und die Störungsempfindlichkeit des Übertragungssystems sehr gering.

Bezugnehmend auf Fig. 2 wird eine Auswerteschaltung beschrieben, welche bei der vorliegenden Erfindung Anwendung findet. Die Auswerteschaltung 7 wird von einer Spannungsversorgungsschaltung 8 gespeist, die eine Gleichspannung von + 24V auf einen geeigneten Versorgungsspannungspegel, beispielsweise + 5V herunter regelt.

Die Auswerteschaltung 7 umfaßt einen Mikroprozessor mit einem löschbaren Festspeicher 9 (EEPROM), sowie einen Analog/Digital(A/D)-Wandler 11, ein Businterface 10 und einen Verstärker 12. Der Mikroprozessor 9 steuert im Betrieb der Auswerteschaltung das Businterface 10 zum Austausch von Meßdaten. Die Daten können beispielsweise in dem Businterface zwischengespeichert werden und auf ein Anforderungssignal vom Steuerungsrechner 5 an diesen übertragen werden. Darüber hinaus empfängt das Businterface Befehlssignale vom Steuerungsrechner, welche an den Mikroprozessor gerichtet sind. Insbesondere sind diese Daten Konfigurationsdaten zur Einstellung des Verstärkungsfaktors und des Nullpunkts des Verstärkers.

Der verwendete A/D-Wandler 11 ist ein handelsüblicher Wandler, der an seinem Ausgang ein 10 Bit Digitalsignal bereitstellt, das vom Mikroprozessor gelesen wird. Der A/D-Wandler ist hinsichtlich seiner Parameter, beispielsweise seiner Geschwindigkeit, einstellbar. Das Ausgangssignal des A/D-Wandlers wird entweder auf ein Anforderungssignal des Mikroprozessors bereitgestellt oder der Mikroprozessor fragt den Ausgang des Wandlers zyklisch ab. Die vom Wandler erhaltenen Meßwerte speichert der Mikroprozessor in seinem internen Speicher ab.

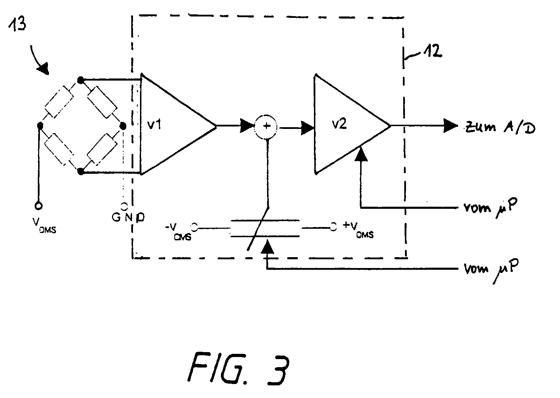

Nunmehr wird der genaue Aufbau des Verstärkers 12 der Auswerteschaltung 7 anhand der Fig. 3 erläutert. In Fig. 3 ist der Anschluß des Verstärkers 12 an einen Dehnmeßstreifen gezeigt, der als Vollbrücke ausgeführt ist. Ein geeigneter Dehnmeßstreifen ist beispielsweise der Typ J2A-06-S1425-35B der Firma Masurements Group. Die Brücke erhält an einem Anschluß V_{DMS} die Brückenspeisespannung bezüglich eines Massepotentials GND und erzeugt an den zwei Ausgangsklemmen eine Brückenausgangsspannung. Die zwei Ausgangsklemmen sind mit dem Eingang eines Vorverstärkers v1 des Verstärkers 12 verbunden. Das vorverstärkte Ausgangssignal erhält einen Offset von einem einstellbaren Widerstand zugeführt. Die Einstellung der Offsetspannung ist, wie oben bereits erwähnt, vom Mikroprozessor in einem Bereich von -V_{DMS} bis +V_{DMS} einstellbar. Das vorverstärkte und mit einem Offset kompensierte Meßsignal wird von einem weiteren Verstärker v2 verstärkt, wobei der Verstärkungsfaktor des Verstärkers v2 über den Mikroprozessor einstellbar ist. Das so aufbereitete Meßsignal wird dann dem A/D-Wandler 11 zugeführt, um es zu digitalisieren.

Abschließend soll der Betrieb des Füllstandsüberwachungssystems zusammenhängend erläutert werden.

Die Brückenausgangsspannung des DMS 13 wird von dem Verstärker 12 in geeigneter Weise verstärkt um ein Meßsignal für den Analog/Digital-Wandler bereitzustellen. Der Mikroprozessor fragt den digitalen Ausgang des A/D-Wandlers zyklisch ab und speichert den aktuellen Wert in seinem internen Speicher ab. Wenn der Mikroprozessor ein Anforderungssignal vom Steuerungsrechner 5 erhält, übergibt er einen Meßwert an das Businterface. Von dort können die Daten bis zum Pegelkonverter 6 übertragen werden und nach geeigneter Umformung vom Steuerungsrechner eingelesen, verarbeitet und angezeigt werden.

Das Füllstandsüberwachungssystem gemäß der vorliegenden Erfindung ist nicht auf die Ausführungen mit nur einem Dehnmeßstreifen und einer elektrischen Auswerteschaltung beschränkt. Vielmehr ist es möglich, eine Vielzahl von Dehnmeßstreifen und zugehörigen Auswerteschaltungen, von denen jede an einem Meßfuß angeordnet ist, unter zentraler Kontrolle des Steuerungsrechners zu betreiben, so wie dies in Fig. 1 angedeutet ist. In diesem Fall kann jedem Mikroprozessor eine bestimmte Adresse zugeordnet werden, um die Auswerteschaltungen selektiv anzusprechen und abzufragen.

## Patentansprüche

1. Füllstandsüberwachungssystem für Behälter (1), insbesondere Silos, wobei durch das Gewicht des Behälters und dessen Inhalt eine Kraft auf wenigstens einen Meßfuß (3) eingeleitet wird, welche eine Längenänderung des Meßfusses bewirkt, mit einem Dehnmeßstreifen (13), der die Längenänderungen erfaßt und einer elektrischen Auswerteschaltung (7) zur Erzeugung eines Meßwerts, der für das Gewicht des Behälters und dessen Inhalt kennzeichnend ist, **dadurch gekennzeichnet**, daß
die Auswerteschaltung (7) in unmittelbarer Nähe des Dehnmeßstreifens (13) am Meßfuß (3) angeordnet ist und ferner einen Analog/Digital-Wandler (11) sowie einen Speicher (9) aufweist.

2. Füllstandsüberwachungssystem nach Anspruch 1, **dadurch gekennzeichnet**, daß die Auswerteschaltung (7) weiterhin einen Mikroprozessor (9) aufweist zur Steuerung des Analog/Digital-Wandlers (11) und des Speichers (9).

3. Füllstandsüberwachungssystem nach Anspruch 1 oder 2, **dadurch gekennzeichnet**, daß die Auswerteschaltung (7) einen Verstärker (12) aufweist, der hinsichtlich seiner Verstärkung und seines Nullpunkts einstellbar ist.

4. Füllstandsüberwachungssystem nach Anspruch 2 und 3, **dadurch gekennzeichnet**, daß die Einstellung der Verstärkung und des Nullpunkts des Verstärkers (12) vom Mikroprozessor (9) steuerbar ist.

5. Füllstandsüberwachungssystem nach Anspruch 4, **dadurch gekennzeichnet**, daß das System einen Temperatursensor umfaßt, dessen Meßsignal vom Mikroprozessor (9) zur Einstellung des Nullpunkts des Verstärkers (12) verwendet wird.

6. Füllstandsüberwachungssystem nach einem der Ansprüche 1 bis 5, **dadurch gekennzeichnet**, daß das System einen übergeordneten Steuerungsrechner (5) aufweist zum Auslesen des Speichers (9) der Auswerteschaltung (7) und daß Einrichtungen (6) vorgesehen sind, zur Aufbereitung des Meßwertsignals der Auswerteschaltung (7) in eine für die Übertragung zum Steuerungsrechner (5) geeignete Form.

7. Füllstandsüberwachungssystem nach einem der Ansprüche 1 bis 6, **dadurch gekennzeichnet**, daß die Auswerteschaltung (7) in einem Gehäuse (4) montiert ist, welches eine Bodenöffnung aufweist, die größer als die Abmessungen des Dehnmeßstreifens (13) ist und daß das Gehäuse so an dem Meßfuß (3) befestigt ist, daß der Dehnmeßstreifen in der Bodenöffnung aufgenommen ist.

8. Füllstandsüberwachungssystem nach Anspruch 7, **dadurch gekennzeichnet**, daß die Bodenöffnung und der Dehnmeßstreifen (13) mit einer Dichtmasse, vorzugsweise Silikon ausgegossen ist.

9. Füllstandsüberwachungssystem nach Anspruch 7 oder 8, **dadurch gekennzeichnet**, daß das Gehäuse (4) Abschirmmittel gegen elektromagnetische Störsignale aufweist.

10. Füllstandsüberwachungssystem nach einem der Ansprüche 1 bis 9, **dadurch gekennzeichnet**, daß das System eine Vielzahl von Dehnmeßstreifen (13) mit zugeordneten Auswerteschaltungen (7) aufweist und daß Einrichtungen zum selektiven Ansprechen und Anfragen der Auswerteschaltungen vorgesehen sind.
